Europäisches Patentamt

European Patent Office

Office européen des brevets

(11) Publication number: **0 431 729 A2**

# EUROPEAN PATENT APPLICATION

(21) Application number: 90309849.9

(51) Int. Cl.⁵: **B32B 5/20**, B32B 31/04

(22) Date of filing: 07.09.90

(30) Priority: 08.09.89 GB 8920343

(43) Date of publication of application:
**12.06.91 Bulletin 91/24**

(84) Designated Contracting States:
**AT BE CH DE DK ES FR GB GR IT LI LU NL SE**

(71) Applicant: **BROOKGEM LIMITED**
**c/o Elliott Templeton Sankey, 8th Floor, Peter House, St Peter's Square**
**Manchester(GB)**

(72) Inventor: **The designation of the inventor has not yet been filed**

(74) Representative: **Smith, Martin Stanley**
**Stevens, Hewlett & Perkins 5, Quality Court Chancery Lane**
**London WC2A 1HZ(GB)**

(54) Panels faced with glass reinforced plastics.

(57) A method of applying a GRP facing to a panel which consists in applying glass fibre reinforcing material to the face of the panel, impregnating the glass fibre material with foaming polyester resin and allowing the resin to foam and cure on the surface of the panel in a mould. The foaming action of the resin fills any voids so that a perfectly flat and smooth panel is manufactured.

FIG 1

## PANELS FACED WITH GLASS REINFORCED PLASTICS

The invention relates to panels faced with glass reinforced plastics (GRP). With plywood cores such panels have been used extensively for the sides of panel-sided trucks and road trailers.

The object of facing the panels with GRP is for reinforcement, weather-proofing and to give an attractive finish. Various methods are in use for applying the GRP facings to the panels, including dry skin processes in which pre-fabricated GRP skins are stuck to the faces of the plywood, and wet processes in which the GRP facings are allowed to cure in situ. In all methods it is important to avoid air bubbles and generally a combination of applied pressure and vacuum exhaustion of air is employed. This has the disadvantageous affect of conforming the GRP facings so closely to the plywood surfaces that surface defects in the plywood are transmitted, or 'telegraphed', through the GRP to be visible on the surface of the panel. Thus, the panel surface bears evidence of wood grain, knots, joints and other surface defects in the plywood. This means that only very high quality and thus expensive plywood is suitable.

An object of the invention is to overcome this difficulty.

According to the invention there is provided a method of applying a GRP facing to a panel which consists in applying glass fibre reinforcing material to the face of the panel, impregnating the glass fibre material with foaming polyester resin and allowing the resin to foam and cure on the surface of the panel in a mould.

Preferably both sides of the panel receive GRP facings in the same way at the same time, the mould accepting a GRP/panel sandwich. The outer surface or surfaces of the GRP facing may be formed by a gelcoat in the mould.

Preferably the interior of the mould is subjected to a vacuum to withdraw air. This also enhances the foaming characteristics of the resin. The invention was developed for use in the GRP facing process known as the "British Industrial Plastics/Brookgem" process. Here the technique is one of matched die moulding and a vacuum is applied to withdraw air.

The invention is, however, applicable to other methods of GRP facing. Such other methods include techniques where hydraulic rams are used to apply pressure to the mould as vacuum is applied, so avoiding entrapment of air. The invention is certainly applicable to methods in which pressure is applied to the mould in various ways, either as well as a vacuum or perhaps instead of a vacuum.

Preferably the moulds include means for heating so that they can be maintained at a predetermined elevated temperature. This ensures repeatability in the process.

Preferably, a suitable resin is used together with t-butyl hydrazinium cloride and ferric cloride and MEKP and tertiary butyl penbenzoate catalysts to cause the resin to expand in volume to fill voids in the panel.

As an example, the resin Norpol PO2436 is used with the foaming agent Luperfoam 329, the catalyst being Luperox DP33.

Other resin, foaming agents and catalysts may be used. If the resin does not include an aerosol, as Norpol PO2436 does, then it is advisable to include an aerosol as a thixotropic agent. It has been found to be most important to avoid resins which include cobalt. Those which use copper as the accelerator are particularly suitable.

The process according to the invention uses a resin system which has a propensity to foam or effervesce during the curing process. This foaming action is enhanced in a vacuum such as the one that is applied to the moulding cavity, between the mould and the counter-mould while the resin is curing.

For most of the area of the panel, there is no room for the resin to foam into and so only foaming in the overflow around the perimeter of the panel is encountered. However, if plywood is used with severe surface defects in the outer veneers such as open knot holes, gaps and splits between the veneers themselves or poorly aligned or machined joints between successive plywood boards, the foaming action of the resin fills up these voids and so a perfectly flat and smooth panel is manufactured.

Furthermore, any defects in the fibreglass woven roving or other reinforcement is also masked by the foaming action of the resin and no telegraphing through of any defects is encountered.

In this process, permanent coloured surface films such as Tedlar can be incorporated into the panel, instead of gelcoats.

The invention will further be described with reference to the accompanying drawings, of which:-

Figure 1 is a cross-sectional view of a two-part mould used to perform the invention;

Figure 2 is a plan view of the mould when closed;

Figure 3 is a cross-sectional view of the assembled mould;

Figure 4 is a cross-sectional view of another arrangement used to perform the invention; and

Figure 5 is a cross-sectional view of the arrangement of Figure 4 during the curing stage.

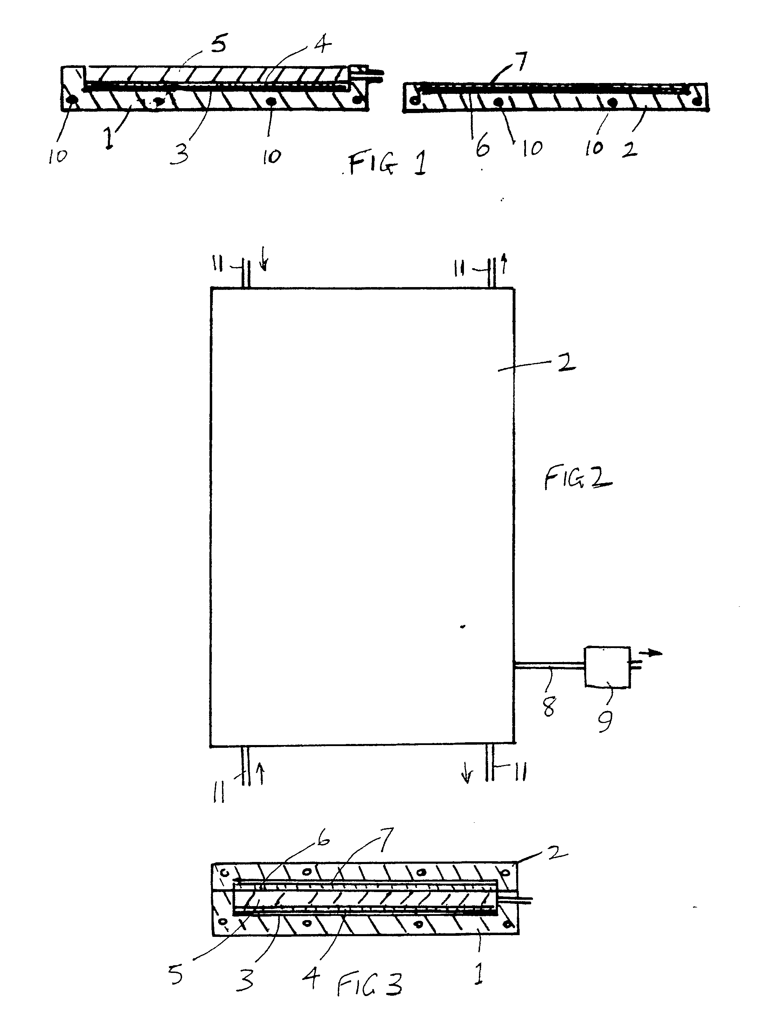

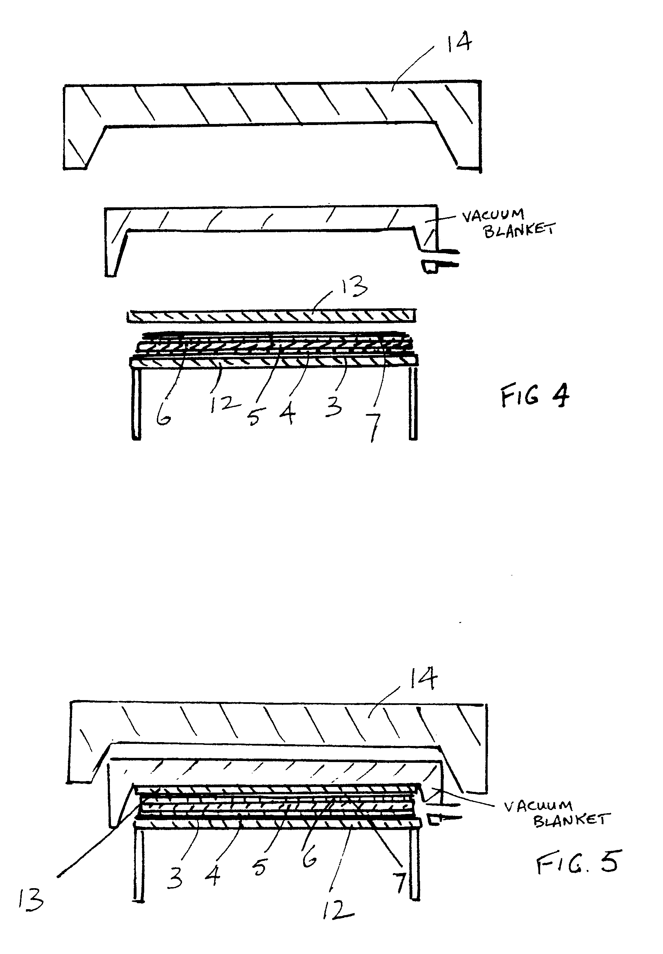

Referring to Figure 1 there is shown a lower mould 1 and an upper mould 2. The moulds are rectangular as shown in Figure 2 and of such a size as to accept a standard ply-wood panel. In use in accordance with the invention, the lower mould is first provided with a gelcoat 3, on which is laid woven glass-fibre matting 4. The matting receives an even distribution of foaming resin as described above. Then the ply-wood panel 5 is laid on top. The top mould 2 receives a gelcoat 6 on which is laid glass-fibre matting 7 which receives an even distribution of foaming resin.

The lower mould 2 is then lifted, upturned and placed on the lower mould 1 with which it seals at the rim. The assembled mould is shown in Figure 3. An exhaust pipe 8 is coupled to a vacuum pump 9 to exhaust air from the interior of the mould. At the same time curing of the resin is promoted by heating the mould. In this case the mould parts have channels 10 and connection pipes 11 whereby hot water is circulated. Alternatively the mould can be placed in a hot air stream in an oven.

As it cures, the resin foams to fill any imperfections in the panel and is constructed by the mould surfaces to give a smooth exterior to the finished panel. After curing the mould is opened and the panel removed.

Referring now to Figures 4 and 5 there is shown an alternative arrangement in which a bottom platen 12 receives a "wet layup" of the components of the panel. Thus, the bottom platen receives a gelcoat; glass-fibre; foaming resin; ply-wood panel; glass-fibre; foaming resin and gelcoat in that order. A top platen 13 is placed over the assembly and a vacuum cover is placed over platen 13 to overlap the edge of the assembly. Air is withdrawn via a vacuum pump coupled to the vacuum blanket and a mobile oven 14 is brought over the assembly to provide heat. It is to be understood that in accordance with the invention "mould" includes the platen arrangement of Figures 4 and 5.

The invention is not restricted to the details of the above described embodiment. For example, instead of being of plywood, the panel core may be of particle board such as chipboard, of polyurethane or PVC foam materials, or of other suitable materials.

## Claims

1 A method of applying a GRP facing to a panel which consists in applying glass fibre reinforcing material to the face of the panel, impregnating the glass fibre material with foaming polyester resin and allowing the resin to foam and cure on the surface of the panel in a mould.

2 The method of claim 1 wherein both sides of the panel receive GRP facings in the same way at the same time, the mould accepting a GRP/panel sandwich.

3 The method of claim 1 or claim 2 wherein the outer surface or surfaces of the GRP facing are formed by a gelcoat in the mould.

4 The method of claim 1 or claim 2 wherein one or more coloured surface film is incorporated into the panel.

5 The method of any of the preceding claims wherein the interior of the mould is subjected to a vacuum to withdraw air.

6 The method of any of the preceding claims wherein pressure is applied to the mould.

7 The method of any of the preceding claims wherein the mould includes means for heating so as to maintain a predetermined elevated temperature.

8 The method of any of the preceding claims wherein a suitable resin is used together with t-butyl hydrazinium cloride and ferric cloride and MEKP and tertiary butyl penbenzoate catalysts to cause the resin to expand in volume to fill voids in the panel.

FIG 1

FIG 2

FIG 3

4

14

VACUUM
BLANKET

13

6 12 5 4 3 7

FIG 4

14

VACUUM
BLANKET

3 4 5 6 7

13

12

FIG. 5